# EUROPEAN PATENT APPLICATION

(11) **EP 1 489 616 A1**
(43) Date of publication of application: **22.12.2004**
(21) Application number: 04075813.8
(22) Date of filing: 15.03.2004
(51) Int. Cl.: G11B 27/034, G11B 27/10, G11B 27/30, G11B 20/10, G11B 20/12

(54) **Method of generating a multimedia disc**

(30) Priority: 25.03.2003 US 396598
(71) Applicant: EASTMAN KODAK COMPANY, Rochester, New York 14650 (US)
(72) Inventor: Lei, Phoury, Rochester New York 14650-2201 (US); Loui, Alexander C., Rochester New York 14650-2201 (US); Dworsky, Howard, Rochester New York 14650-2201 (US)
(74) Representative: Haile, Helen Cynthia

(57) **Abstract**

A method of generating a multimedia disc. The method includes the steps of: accessing a plurality of digital still images; generating a single MPEG bitstream comprising at least one of the plurality of digital still images; accessing the at least one of the plurality of digital still images; creating a description file defining a file structure comprising the MPEG bitstream and the at least one of the plurality of digital still images; interpreting the description file to generate a disc image of the multimedia disc; and generating the multimedia disc using the disc image.

## Description

The invention relates generally to the authoring of a multimedia enabled disc.

The use of digital cameras has increased in recent years. Accordingly, the volume of commercial and consumer held digital image files has also increased. Much like the problem of a closet full of shoe boxes of randomly held photographic prints, in the digital environment, there are computer "shoe boxes" full of randomly stored digital images. This leads to problems in locating and categorizing digital files, particularly digital files of graphical images, that is, digital graphics files.

A traditional photo album stores photographic prints. These photographic prints are placed in the album and often times annotated to identify particular information about the photographic print. An electronic photo album can store digital graphics images in a way similar to the traditional photo album. Eastman Kodak Company has developed digital graphic album applications, such as the Kodak Picture Page or the Kodak Memory Album software, which allows a user to organize digital graphics images into album pages. Users can organize images by various means, for example, by date, time, places, or subject. The software may allow a user to annotate the digital graphics image by entering text or other information describing the digital graphics image.

An electronic photo album may contain digital graphics images from many sources other than the owner/user of the electronic photo album. For example, the digital graphics image might be taken with a digital camera, or it might be a photographic print scanned and converted to digital format. Alternatively, the digital graphics image might be created electronically, such as with a graphic software program or photo editing software program. There are private and commercial sources of digital graphics images, for example, stock photo agencies and shared photo resources such as the internet. Digital graphics images can be accessed via the internet, downloaded to a personal computer, and placed in a digital graphics album. The multimedia digital graphics album can include, in a single digital graphics album, digital still images, computer generated graphics as well as such items as video clips, audio clips, and voice annotations.

It may be desired to transfer the digital graphics album to another digital media, for example a multimedia enabled disc, so that the album can be viewed using popular, commercially available consumer equipment, and can be played on a variety of consumer equipment, including consumer audiovisual equipment and a computer.

Methods have been disclosed for multimedia authoring including U.S. Patent No. 5,592,602, (Edmunds et al.) directed to authoring tools for manipulating screen objects during the authoring of multimedia art; U.S. Patent No. 5,907,704 (Gudmundson et al.) directed to a system for authoring interactive multimedia applications; and U.S. Patent No. 5,515,490 (Buchanan et al.) directed to a system and method for the automatic temporal formatting of multimedia documents. However, these references are not directed to the authoring of multimedia digital graphics albums.

Software applications are available for personal computers for multimedia authoring. For example, Ulead VideoStudio V5.0 provided by Ulead Systems Incorporated is described at www.ulead.com.

However, a need continues to exist for a method of generating a multimedia disc which is compatible with a personal computer and consumer audiovisual equipment. As such, the multimedia disc can be accessed using various systems. A need also continues to exist for a method for authoring a multimedia enabled disc which can include PC-based software applications and/or digital images compatible for a PC, and comprise a multimedia digital graphics album which can be played on a variety of consumer equipment.

The present invention provides a method of generating a multimedia disc which is compatible with a personal computer and consumer audiovisual equipment, whereby the multimedia disc can be accessed using various systems. The method provides for authoring a multimedia enabled disc which includes PC-based software applications and/or digital images compatible for a PC, and comprise a multimedia digital graphics album which can be played on a variety of consumer equipment.

### SUMMARY OF THE INVENTION

An object of the present invention is to provide a method of generating a multimedia disc.

Another object of the present invention is to provide such a method wherein the disc is compatible with a personal computer and consumer audiovisual equipment.

A further object of the present invention is to provide such a method wherein the disc can include a PC-based software applications and/or digital images compatible for a PC, and comprise a multimedia digital graphics album which can be played on a variety of consumer equipment.

These objects are given only by way of illustrative example, and such objects may be exemplary of one or more embodiments of the invention. Other desirable objectives and advantages inherently achieved by the disclosed invention may occur or become apparent to those skilled in the art. The invention is defined by the appended claims.

According to one aspect of the invention, there is provided a method of generating a multimedia disc. The method includes the steps of: accessing a plurality of digital still images; generating a single MPEG bitstream comprising at least one of the plurality of digital still images; accessing the at least one of the plurality of digital still images; creating a description file defining a file structure comprising the MPEG bitstream and the at least one of the plurality of digital still images; interpreting the description file to generate a disc image of the multimedia disc; and generating the multimedia disc using the disc image.

According to another aspect of the invention, there is provided a method of generating a multimedia disc. The method includes the steps of: accessing a plurality of digital still images; generating a single MPEG bitstream comprising at least one of the plurality of digital still images; accessing the at least one of the plurality of digital still images; formatting the at least one of the plurality of digital still images as a JPEG image in accordance with an image processing and rendering software application; creating a description file defining a file structure comprising the image processing and rendering software application, the MPEG bitstream, and the JPEG image; interpreting the description file to generate a disc image of the multimedia disc; and generating the multimedia disc using the disc image.

According to a further aspect of the invention, there is provided a method of generating a multimedia disc. The method includes the steps of: accessing a plurality of digital still images; generating a first MPEG bitstream comprising a first one of the plurality of digital still images; associating a first image location with the first MPEG bitstream; generating a second MPEG bitstream comprising a second one of the plurality of digital still images; associating a second image location with the second MPEG bitstream; providing a selection means for a user to select an albuming option; accessing the first image location associated with the first MPEG bitstream to access the first one of the plurality of digital still images; accessing the second image location associated with the second MPEG bitstream to access the second one of the plurality of digital still images; formatting the first one and the second one of the plurality of digital still images in accordance with an image processing and rendering software application to create a first and second JPEG image, respectively; creating a description file defining a file structure comprising the first and second MPEG bitstreams, the first and second JPEG images, and the image processing and rendering software application; interpreting the description file to generate a disc image of the multimedia disc; and generating the multimedia disc using the disc image.

### BRIEF DESCRIPTION OF THE DRAWINGS

The foregoing and other objects, features, and advantages of the invention will be apparent from the following more particular description of the preferred embodiments of the invention, as illustrated in the accompanying drawings.
FIG. 1 shows a system suitable to perform the method in accordance with the present invention.
FIG. 2 shows a flow diagram of a method in accordance with a first embodiment of the present invention for generating a multimedia disc.
FIG. 3 shows an exemplary screen for the method of FIG. 2.
FIG. 4 shows the exemplary screen of FIG. 3 showing a plurality of digital still images.
FIG. 5 shows a flow diagram of a step of the method shown in FIG. 2.
FIG. 6 shows a flow diagram of another step of the method shown in FIG. 2.
FIG. 7 shows a disc structure.
FIG. 8 shows a track of the disc structure of FIG. 7.
FIG. 9 shows the storage to provide a Picture CD compatible directory structure.
FIG. 10 shows a flow diagram of a method in accordance with a second embodiment of the present invention for generating a multimedia disc.
FIG. 11 shows an exemplary screen for the method of FIG. 10.
FIG. 12 shows the exemplary screen of FIG. 3 showing a plurality of digital still images and the software application selection.
FIG. 13 shows a flow diagram of a step of the method shown in FIG. 10.
FIG. 14 shows script of an XML file to include a JPEG file into a multimedia disc.

The following is a detailed description of the preferred embodiments of the invention, reference being made to the drawings in which the same reference numerals identify the same elements of structure in each of the several figures. Reference is made to commonly assigned application EP No. 02077246.3 entitled "SYSTEM AND METHOD FOR RECORDING MULTIMEDIA INFORMATION ON AN OPTICAL DISC", filed on June 10, 2002 in the names of Loui et al, and which is assigned to the assignee of this application.

The term "multimedia" refers to the inclusion or involving of several media. Preferably, the media is employed to generate a digital graphics album. The multimedia material comprises a plurality of media material so as to provide a rich and full context and presentation, and expand a viewer's enjoyment when viewed. Such multimedia material can include, but is not limited to images, audio, video, and any combination thereof.

The present invention provides a method for authoring a multimedia enabled disc comprising computer-based content (such as a personal computer) as well as a multimedia digital graphics album. For example, the computer-based content of the disc may comprise the original images/video/audio of the album (i.e., the original content of the album). If the original content is disposed on the same disc as the album, the original content can be readily shared, transferred, viewed, printed, emailed, and/or used in a website. By way of illustration, after the viewing of the album on consumer equipment, a viewer may desire to obtain a print of one of the images viewed in the album. If the original content is disposed on the disc, the viewer can readily obtain the desired image by using the disc with a personal computer.

In addition, the computer-based content can be a software application. In a preferred embodiment, the software application program is an image processing and rendering software application, for example Kodak Picture CD available from Eastman Kodak Company. Inclusion of the software application allows a user to view the images disposed on the disc using their personal computer as well as using a television. The user can use the personal computer to edit and/or enhance the images, transfer the images (e.g., email), print the images, and the like. Printing can be accomplished at the user' home using a home computer or at a remote location, for example by an on-line service such as Ofoto, a Kodak Company.

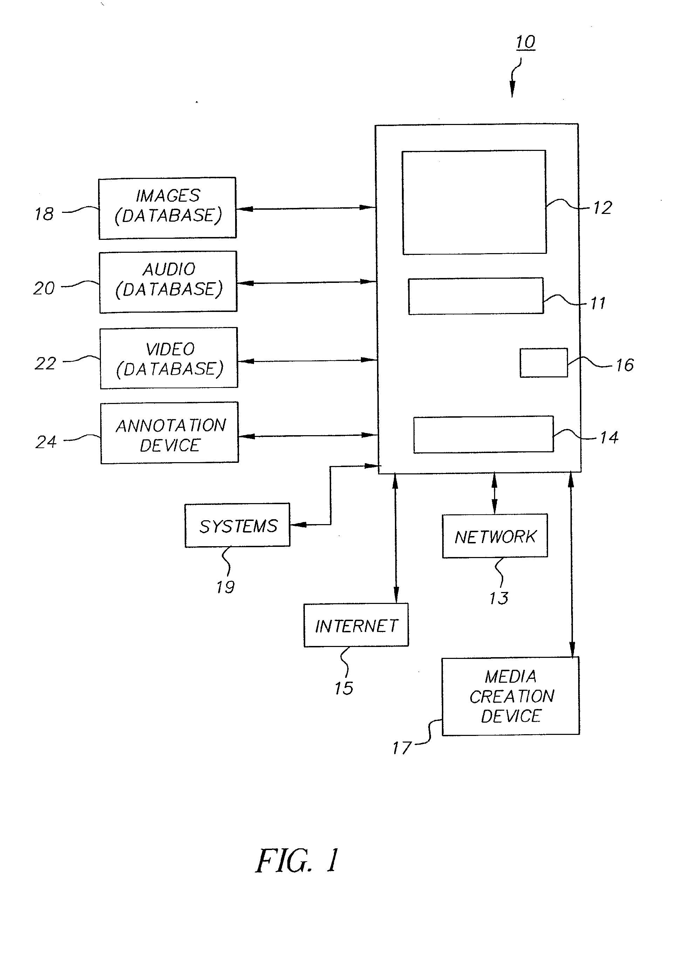

Figure 1 shows a system 10 suitable to perform the method in accordance with the present invention. System 10 comprises a processing unit 11 and an input device 12 for communicating with the user. Preferably, input device 12 is a screen or monitor having a touch screen interface, though alternatively, a keyboard 14 or other input device (such as a mouse or track ball) may be used by the user. System 10 can be a stand-alone system or network connected 13. Further, the system can be located within a home or located outside a home, such as at a retail store, professional photo studio, or other business venue. If located within a home, system 10 can be comprised of a home personal computer. If located outside of the home, system 10 could be comprised of a kiosk such as a Kodak Picture Maker (from Eastman Kodak Company) or the like. If network connected, the connections may be disposed within or outside processing unit 11. Connections to the Internet 15 can be desirable as would connections to other systems 19, such as to a photofinisher or a kiosk such as a Kodak Picture Maker.

The multimedia material can include digital images, audio, and video, either taken alone or in any combination. Therefore, system 10 may include an input port 16 to provide/acquire digital images, audio, and video. Examples of input port 16 include a CD drive, a DVD-ROM drive, a flash card or memory card reader, a floppy disk drive, a microphone, and the like. System 10 further includes a media creation device 17 for producing a recordable optical disc such as a CD/DVD writer for the creation of the multimedia enabled disc.

System 10 can be configured to access images from various sources, represented in Figure 1 as images 18. Such images could be taken with a digital camera, that is, digital still images. Alternatively, a digital still image can be acquired from an image taken with photographic film wherein the image is printed, scanned and converted to digital format. Such digital still images could be stored on a floppy disk, compact disc, memory card, or flash card. Accordingly, system 10 may utilize input port 16 as a means to input the digital still images. Images 18 of system 10 could include an image database comprised of images which are theme-specific, for example scenes from a wedding, birthday party, baby birth, and graduation. The database could also comprise images of a regional interest, for example, scenery of popular tourist attractions, national monuments, national parks, and historic sites. Further, images can comprise cartoon characters, animations, and graphical art. Similarly, the images may be selected from other sources available by means of the Internet, network, or other systems.

Input formats for images 18 include BMP, DCS, DIB, EXIF, FlashPix, IMPS, JPEG, JPEG 2000, PhotoCD, PPM, TIFF, and Raw image formats.

Image 18 can be a background image, such as for a title page, index sheet, and/or for bordering/framing the other images, similar to how a wallpapered wall borders/frames a picture hanging on the wall. As with the input formats for digital still images, the input formats for the background image include BMP, DCS, DIB, EXIF, FlashPix, IMPS, JPEG, JPEG 2000, PhotoCD, PPM, TIFF, and Raw image formats.

Audio material may also be included, and is represented in Figure 1 as audio 20. As with images 18, audio 20 can be selected for various sources. For example, a system in accordance with the present invention may include an audio database having a plurality of audio clips with different genres such as light music, classical, rock, and theme-specific, e.g., music suitable for wedding, birthday party, baby birth, and graduation. System 10 may utilize input port 16 to provide means to permit the input of audio in digital form, for example, from a memory card, flash card, or other similar device. Such an input port allows a user to provide personally composed music compositions. The audio material may be selected from other sources available by means of the Internet, network, or other systems.

In addition to music, the audio database may comprise voice clips. For example, quotes from well-known novels, plays, or movies, and voices from well-known personalities such as actors, actresses, and politicians. Using input port 16, a user may provide personal voice clips. For example, if input port 16 comprised a microphone, personal voice clips could be recorded. This feature may be used when a user desires to annotate their images using a digital camera. As such, each image will include an associated speech file (e.g., a .wav file). A resulting multimedia digital graphics album having this feature would be similar to or have the feeling of a narrated slide show.

Input formats for audio include Wave file, MP3, Music CD audio, Apple/SGI formats (.AIFF, .AIF), Sun audio (.AU), and Creative Lab format (.VOC).

Video material may also be included. The video can be selected from various sources, represented in Figure 1 as video 22. For example, system 10 in accordance with the present invention may include a video database. The database could comprise a plurality of video clips which are theme-specific, for example scenes from a wedding, birthday party, baby birth, and graduation. The input of video might be accomplished using input port 16. For example, from a floppy disk, memory card, flash card, or other similar device. Such an input port allows a user to provide personally composed video compositions. The video images may be selected from other sources available by means of the Internet, network, or other systems.

The video could be provided as a moving background, and may or may not be accompanied by audio. Alternatively, the video can be comprised of a plurality of still images, and may or may not be accompanied by audio.

Input formats for video include MPEG-1, MPEG-2, MPEG-4, H.261, H.262, H.263, CCIR 601 (digital video standard), AVI (MS Windows media format), Quicktime, DV (from digital video camcorders), and real video (Real Network).

System 10 can also include an annotation device 24. That is, a device for text annotation or speech annotation in real time. The annotations can be included as part of a title or for captioning of the multimedia digital graphics album. For example, for speech input, annotation device 24 can comprise a microphone and a built-in speech-to-text engine which converts the speech into text. Such an annotation device preferably includes an interface (e.g. a keyboard) to allow the user to make corrections.

The databases (for images, audio, or video) may be an existing database comprised of stock images, or a private database. A stock database generally requires the user to pay a copyright fee for access to the graphical materials, and perhaps a basic subscription fee might be imposed.

Media creation devices 17, such as writers/generators for CD-R and DVD-recordable discs, are commercially available devices. Such devices can be purchased for home use. To enable a fast writing process, high-speed writers (better than 4X) are preferred. Various multimedia enabled discs may be created by media creation device 17, for example, a VCD (video compact disc), a SVCD (super video compact disc), or a DVD (digital video disc). Players for each of these examples of a multi-media enabled disc are available as consumer audiovisual equipment. Both VCD and SVCD use CD media, whereas DVD uses DVD media. Accordingly, when a VCD is desired, a VCD image is created and a final VCD is burned (using media creation device 17), preferably along with a pre-defined menu. Similarly, when a SVCD is desired, a SVCD image is created and a final SVCD is burned (using media creation device 17), preferably along with a pre-defined menu. Likewise, when a DVD is desired, a DVD image is created and a final DVD is generated (using media creation device 17), preferably along with a pre-defined menu.

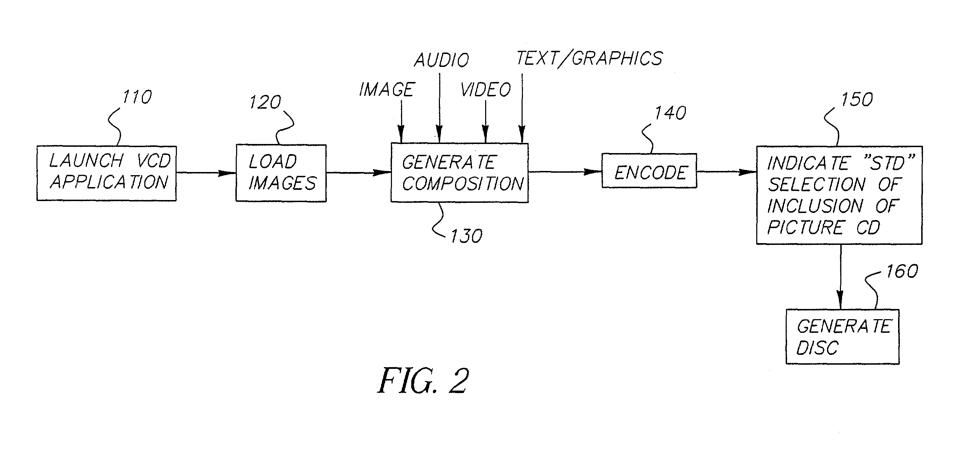

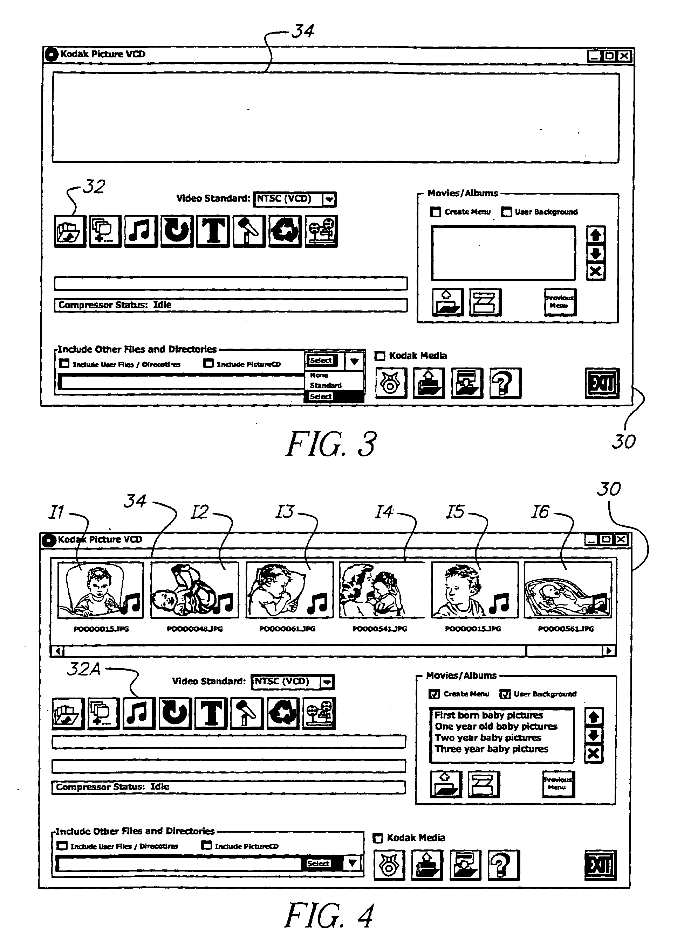

Figure 2 shows a flow diagram of a method in accordance with a first embodiment of the present invention for generating a multimedia disc. At step 110, the authoring application is launched. Images are loaded (step 120) and the multimedia composition is generated (step 130). At step 140, the composition is encoded. The processing and rendering software application is selected (step 150). Then, the disc is generated (step 160) using media creation device 17. These steps are now more particularly described with reference to Figures 3 to 9.

Step 110 refers to the launching of an authoring application on system 10. Launching includes the initialization of a graphics user interface (GUI) base operating system as shown in Figure 3. As shown in Figure 3, the authoring application displays a screen 30 including icons/characters/graphics (hereinafter icons 32) representative of the features of the authoring application and an image display area 34. For example, folder, music, time, voice, and video.

Step 120 is accomplished by accessing a digital still image. Preferably, a plurality of digital still images are accessed. As described above, the images can be accessed from various sources, including image database 18. Referring to Figure 4, a plurality of images I1-I6 have been accessed and are displayed in image display area 34.

The composition of the digital graphics album is generated at step 130. This generation can include selecting images for inclusion in the composition, adding a background image, audio, video, voice annotations, music, and indicating a time duration for the display of a particular image. Icons 32 can be employed to assist a user in the generation of the composition. For example, a music icon (shown in Figure 4 as 32a) can be employed as a means for the user to indicate a desire to include music with the showing of an image. As shown in Figure 4, music has been associated with each image I1-I6 by the display of a music symbol proximate the image in image display area 34.

Generating a composition is more particularly described in commonly assigned EP application No. 02077246.3, entitled "SYSTEM AND METHOD FOR RECORDING MULTIMEDIA INFORMATION ON AN OPTICAL DISC", filed on June 10, 2002 in the names of Loui et al.

At step 140, when the composition has been generated, the images comprising the composition are encoded to generate a single MPEG bitstream. That is, a single MPEG bitstream is generated comprising the selected images.

At step 150, an image processing and rendering software application is selected, and the digital still images comprising the composition are formatted as a JPEG image in accordance with the selected image processing and rendering software application. A preferred image processing and rendering software application is Kodak Picture CD available from Eastman Kodak Company. Other image processing and rendering software applications can be employed, such as ACDSee by ACD Systems. Icons on screen 30 can be employed to indicate selection of the software application. This step is more particularly described below.

After the formatting of the digital still images and the generation of the single MPEG bitstream, the multimedia disc can be generated (step 160). In particular, a description file is created defining a file structure comprising the image processing and rendering software application, the MPEG bitstream, and the formatted JPEG image. This description file is interpreted to generate a disc image of the multimedia disc. This step is more particularly described below. Icons on screen 30 can be selected to activate/initiate step 160.

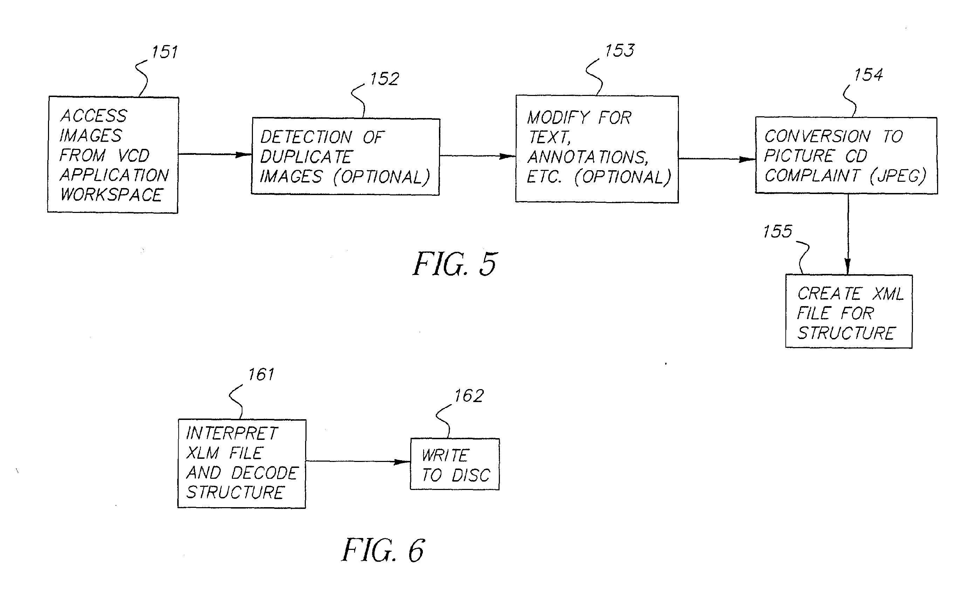

As indicated above, at step 150, an image processing and rendering software application is selected, and the digital still images comprising the composition are formatted in accordance with the selected image processing and rendering software application. Step 150 is now more particularly described with reference to Figure 5.

At step 151, the digital still images comprising the composition are accessed. In generating the composition, a particular digital still image may be used multiple times. As such, there may be duplicates of the digital still images. At step 152, this duplication can be determined, if desired. If determined, the duplication can be eliminated. At step 153, characteristics of each digital still image can be modified. These modifications include audio (such as music), text annotation, speech annotation, and graphics. For example, text or speech annotation can be added to or removed from an image, or the text or speech annotation can be amended, including font, size, color, volume, and the like. In a further example, a music clip might be associated with one or more digital still images and it may be desired to remove/change this association. Or a music clip might not be associated with the particular digital still image, and it may be desired to add this association.

Once the digital still images are in a form desired by the user, system 10 formats the digital still images as a JPEG image in accordance with the selected image processing and rendering software application (step 154). That is, the images are converted in a manner consistent with the rendering software application. An XML file structure is then created (step 155).

As indicated above, at step 160 the multimedia disc is generated. This step is now more particularly described with reference to Figure 6. At step 161, the XML file (i.e., the description file) is interpreted and the structure decoded so as to generate a disc image. The disc image generated by step 161 can be of different formats for describing the disc image. For example, a bin/cue file or an ISO image file. Then, at step 162, the multimedia disc is written (using media creation device 17) using the disc image.

As written, the image processing and rendering software application is operable on a computer, and the JPEG image is viewable using the image processing and rendering software application.

The multimedia enabled disc is preferably configured as a normal compact disc so that it can be viewed and manipulated on a personal computer as well as being used as a Video CD (VCD), Super Video CD (SVCD), or DVD. Accordingly, for a VCD, a normal CD-ROM file structure with high-resolution images and other software applications (for example, as provided with a Kodak Picture CD) is included as in a standard compact disc so that the digital still images included in the MPEG bitstream can also be accessed as JPEG files so that they can be viewed and manipulated on a personal computer.

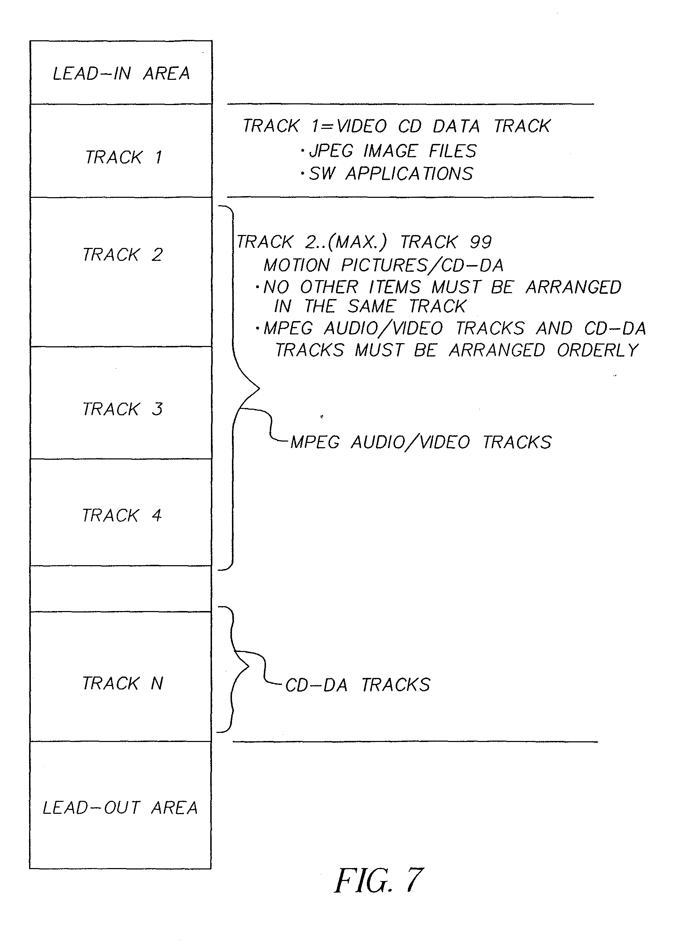

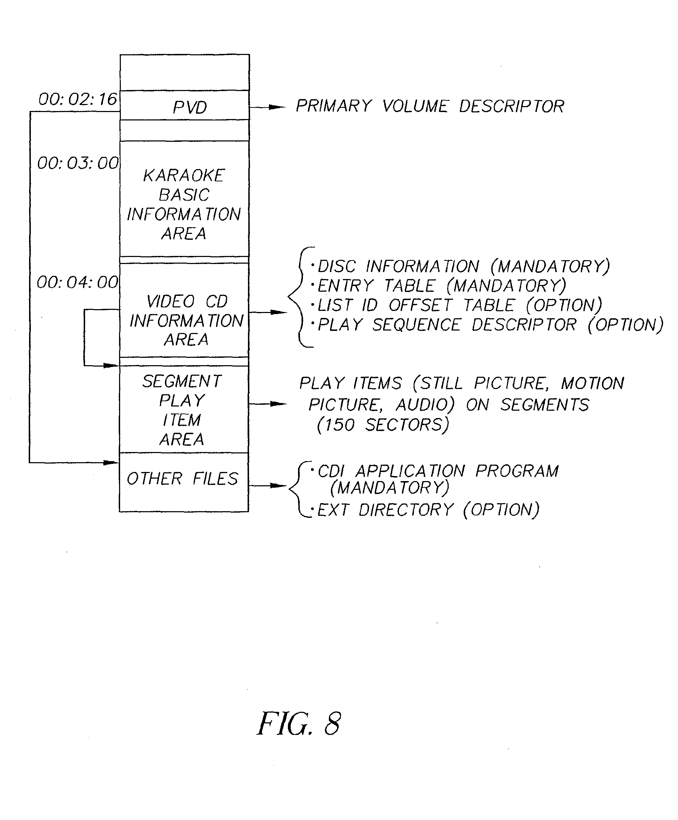

The digital images encoded as digital image files are written into Track 1 of the disc structure, shown in Figure 7 as a VCD disc structure. In accordance with the disc standard, Track 1 area contains the disc information area, the ISO 9660 (CD-ROM) file structure, and other options such as Segment Play Item area. A more detailed breakdown of the information recorded in Track 1 is depicted in Figure 8.

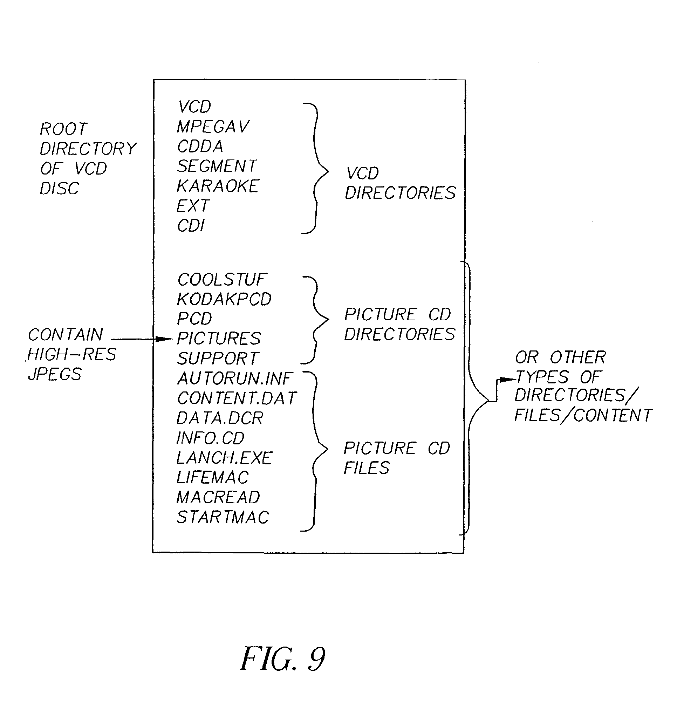

The encoding of the digital still images enables the digital image files to be used by various consumer equipment, such as personal computer, and by image editing software applications. Figure 9 shows an example of how the digital image files (i.e., the JPEG digital image files) and/or software application are stored for a VCD. A root directory structure of a VCD is illustrated. This directory provides a Kodak PictureCD compatible directory structure. The digital image files are stored in the "Pictures" directory shown in Figure 9. Other software applications, such as for viewing and editing these digital image files, can be stored, for example, in the "Coolstuf" directory or other Picture CD directory. As a result, the multimedia enabled disc provides a Kodak Picture CD compatible disc, since the digital still images included in the MPEG bitstream for the multimedia digital graphics album are also stored separately as Picture CD compatible JPEG image files.

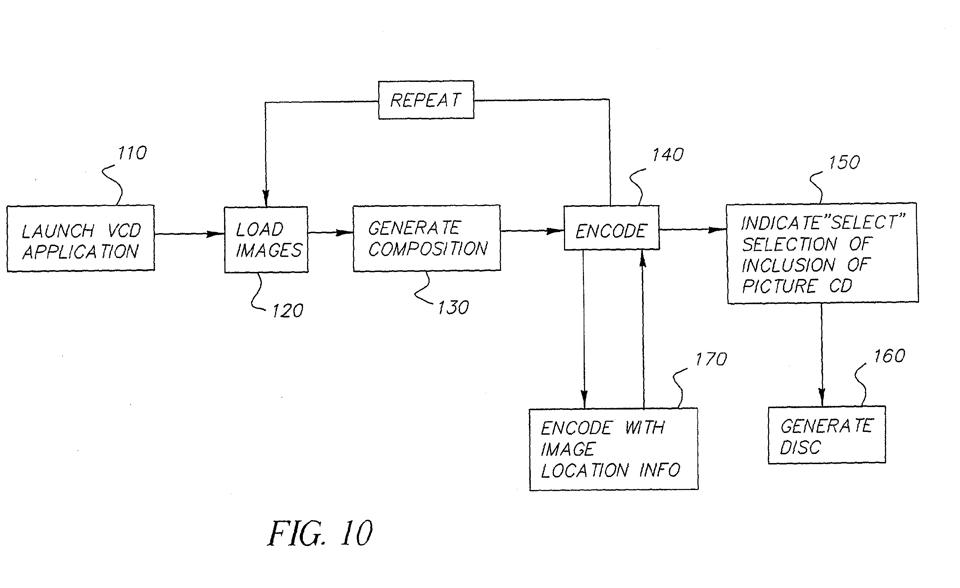

Figure 10 shows a flow diagram of a method in accordance with a second embodiment of the present invention for generating a multimedia disc. In this second embodiment, multiple graphics album are generated for storage on the multimedia disc.

At step 110, the authoring application is launched. Images are loaded (step 120) and the multimedia composition is generated (step 130). At step 140, the composition is encoded. Since multiple graphics albums are generated, the steps of 120, 130 and 140 are repeated for each album. The processing and rendering software application is selected (step 150). Then, the disc is generated (step 160) using media creation device 17. In addition, the image location information for each graphics album needs to be encoded (step 170). These steps will be more particularly described with reference to Figures 10 to 13.

As with the first embodiment, a plurality of digital still images are accessed (step 120). The first graphics album is composed of a first plurality of digital still images (step 130) and a corresponding first MPEG bitstream is generated (step 140) comprising the first plurality of digital still images. A first image location is associated with the first MPEG bitstream (step 170). Next, same/additional digital still images are accessed in anticipation of composing a second graphics album (step 120). The second graphics album is composed of a second plurality of digital still images (step 130) and a corresponding second MPEG bitstream is generated (step 140) comprising the second plurality of digital still images. A second image location is associated with the second MPEG bitstream (step 170).

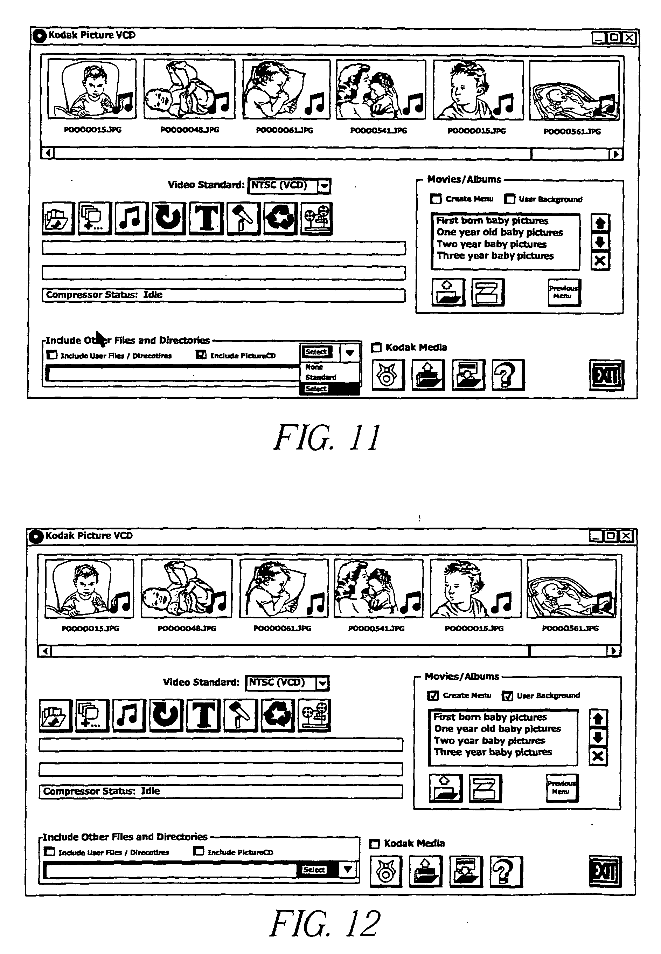

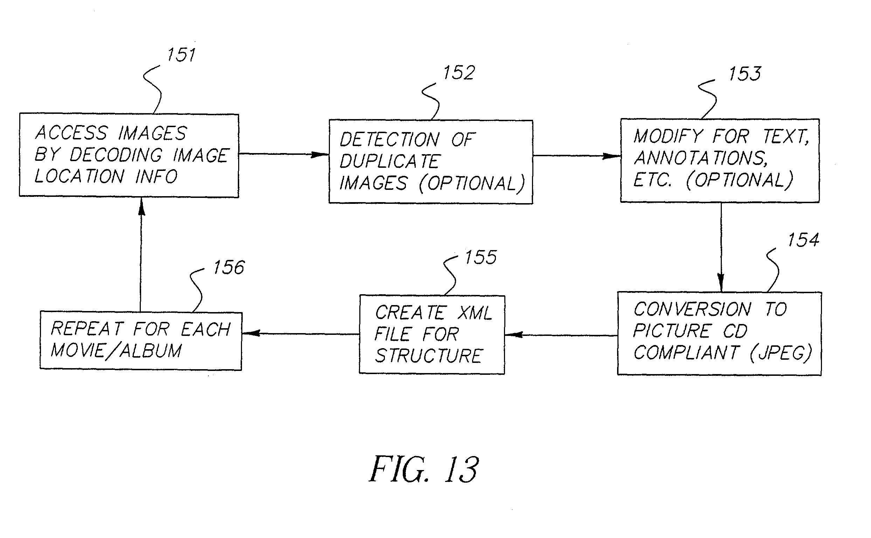

At step 150, a selection means is provided for a user to select an albuming option. This can be accomplished by system 10 by selecting the album option of the embedded image processing and rendering software application. Preferably, this software application is Kodak Picture CD, and as such, for multiple graphics albums, the "select" option is selected as best shown in Figures 11 and 12. Step 150 is now more particularly described with reference to Figure 13 for this second embodiment.

Steps 151 through 155 are repeated for each graphics album. Accordingly, at step 151, the digital still images comprising the composition are accessed by decoding the image location information. That is, the first image location associated with the first MPEG bitstream is accessed to access the first plurality of digital still images. At step 152, the optional duplication determination is made. At step 153, characteristics of each digital still image can be modified. Once the digital still images are in a form desired by the user, system 10 formats the digital still images as a JPEG image in accordance with the selected image processing and rendering software application (step 154). An XML file structure is then created (step 155).

Steps 151 through 155 are repeated for the second graphics album. As such, for the second graphics album, the second image location associated with the second MPEG bitstream is accessed to access the second plurality of digital still images (step 151). At step 152, the optional duplication determination is made. At step 153, characteristics of each digital still image can be modified. Once the digital still images are in a form desired by the user, system 10 formats the digital still images as a JPEG image in accordance with the selected image processing and rendering software application (step 154). An XML file structure is then created (step 155).

Therefore, at step 154, the first and second plurality of digital still images are formatted in accordance with an image processing and rendering software application to create a first and second JPEG image.

At step 155, a description file (i.e., an XML file) is created defining a file structure comprising the first and second MPEG bitstreams, the first and second JPEG images, and the image processing and rendering software application. In this embodiment, the description file includes an album description section (i.e., album.xml as further described below) since multiple albums are present.

As indicated above, at step 160 the multimedia disc is generated, as was described with reference to Figure 6. At step 161, the XML file (i.e., the description file) is interpreted and the structure decoded so as to generate a disc image. Then, at step 162, the multimedia disc is written (using media creation device 17) using the disc image.

The image location information can be maintained/associated with the bitstream using several methods. In a first method, the image location is stored in a text file. More particularly, a text file with the full path of the image file is created for each MPEG bitstream and located in the same directory where the respective MPEG stream is stored.

In a second method, the image location is embedded in the MPEG bitstream. More particularly, the full path names of the image files are embedded into the respective MPEG stream. An advantage of this method is that if the MPEG bitstream is moved, the association of the image files is still maintained. This can be accomplished by means of the user data field within the MPEG-1 standard (ISO/IEC 11172-2). Specifically in MPEG-1, user specified data can be inserted into the compressed MPEG bitstream via the user_data_start_code in the sequence_header() of the MPEG video stream. The following is the syntax of using user data within sequence_header():

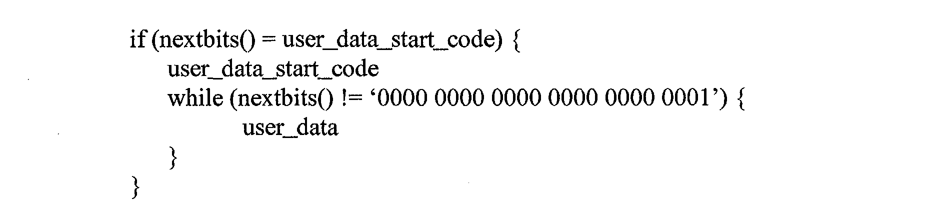

The user_data_start_code is the hexadecimal bit string 000001B2. It identifies the beginning of user data. The user data continues until the receipt of another start code. According to the MPEG standard, the user data shall not contain a string of 23 or more zero bits.

It is noted that in a example implementation of the present invention, a Kodak Picture CD/Picture CD Select compatible Video CD is created as part of the authoring features of system 10. This feature allows the creation of a single disc that can be used in a DVD player as well as on a PC. When inserted into a DVD player that is compatible with Video CD standard, the combo disc will play as a Video CD. When it is inserted into a PC's CD-ROM drive, it launches the Kodak Picture CD application allowing the user to view and manipulate their original images. This authoring feature will automatically create the Picture CD application using the images that appear in the user workspace area of the system's authoring application and images that were previously saved in MPEG streams. In this example implementation, the Picture CD folder includes the following files and folders: Coolstuf (folder), Kodakpcd (folder), Pcd (folder), Albums(folder), Album.dtd, Album.xml, Autorun.inf, Content.dat, Info.cd, Launch.exe, eadme.wri, Startmac, PcdPreLaunch.exe, portions of which are shown in Figure 9.

In this example implementation, system 10 creates a folder called Pictures to store the user images. The application preferably checks the workspace area, as well as the MPEG streams to identify the image file names to be included in the Picture CD application. The original version of these images will then be converted into the JPEG format if they are in other formats. Various image transforms known to those skilled in the art can be used to do the conversion with an image quality factor similar to the standard Picture CD. In addition, duplicate images will be checked in the workspace area so that only one unique image will be included in the Picture CD application.

System 10 creates the info.cd file with the number of images on the disc and a unique order id.

System 10 further creates the album.dtd and album.xml files to describe the albuming functionality of the Picture CD Select disc. The following example script includes the XML to describe one album with 3 images:
</AlbumCD>
<?xml version="1.0" encoding="UTF-8"?>
<!DOCTYPE AlbumCD SYSTEM "Album.dtd">
<AlbumCD title1="KODAK Picture CD Select" title2="" title3="">
<Album title="Family" description="">
<Picture title="" description="">000_1.jpg</Picture>
<Picture title="" description="">000_2.jpg</Picture>
<Picture title="" description="">000_3.jpg</Picture>
</Album>

As disclosed above, at step 153 the digital still image can be modified for annotation. Similar with the image location information, the annotation can be stored in the text file or embedded in the MPEG bitstream. The text annotation inserted into an image by the user can be carried over to the same image when creating the Picture CD/Picture CD Select application. The user will be prompted to include such annotations when creating a Picture CD. These text annotations can be maintained and associated with the individual pictures by: (a) text file that contains the annotation information (such as font size, color, and location) located in the same directory as the corresponding MPEG stream or (b) the annotation information (such as font size, color, and location) is embedded into the corresponding MPEG bitstream by means of the user data area described in the MPEG-1 standard. In a situation wherein the images are in a workspace area while a Picture CD option is selected, the user will be prompted if s/he wants the annotation be carried over to the Picture CD application. If yes, the application will automatically carry over the annotations with the pictures for inclusion into Picture CD/Picture CD Select.

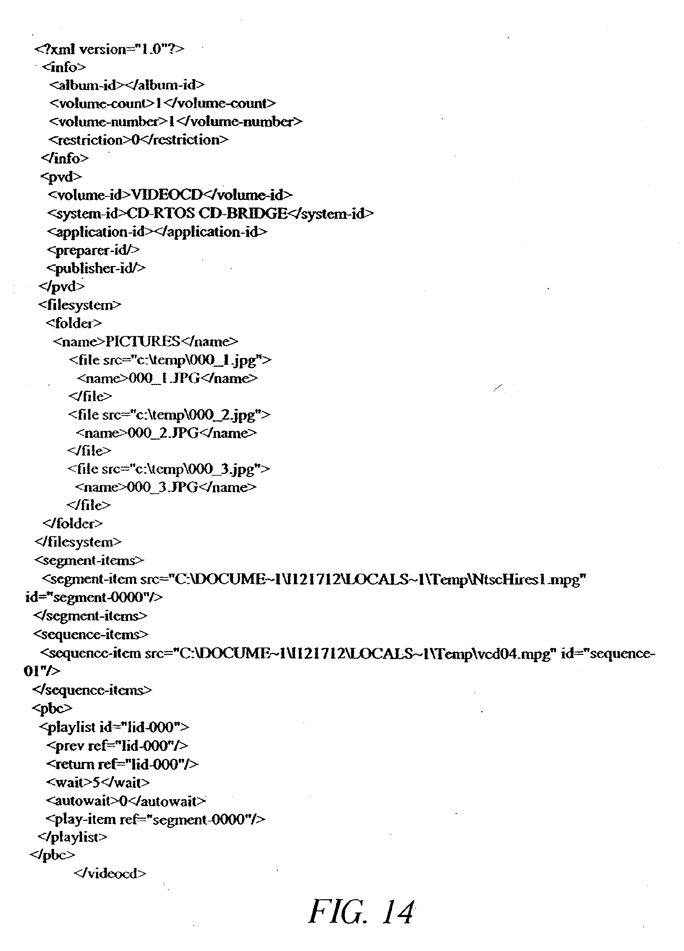

To include a user JPEG file into the multimedia disc, system 10 creates an example XML file which includes the script shown in Figure 14. This example XML script includes information for 3 JPEG files to be included into thePictureCD application co-located with the multimedia disc. In addition, this XML file is interpreted by another application to create the bin/cue files that contain the image of the final disc. The bin/cue files are then used by a CD writing application (such as CDRWIN) to create the final multimedia disc with co-located PictureCD application. (Refer to steps 161 and 162.)

In a third embodiment, the image processing and rendering software application is not included with the multimedia disc. In this embodiment, the method of generating a multimedia disc includes the steps of: accessing a plurality of digital still images; generating a single MPEG bitstream comprising at least one of the plurality of digital still images; accessing the at least one of the plurality of digital still images; creating a description file defining a file structure comprising the MPEG bitstream and the at least one of the plurality of digital still images; interpreting the description file to generate a disc image of the multimedia disc; and generating the multimedia disc using the disc image.

A computer program product may include one or more storage medium, for example; magnetic storage media such as magnetic disk (such as a floppy disk) or magnetic tape; optical storage media such as optical disk, optical tape, or machine readable bar code; solid-state electronic storage devices such as random access memory (RAM), or read-only memory (ROM); or any other physical device or media employed to store a computer program having instructions for controlling one or more computers to practice the method according to the present invention.

## Claims

1. A method of generating a multimedia disc, comprising the steps of: accessing a plurality of digital still images;
generating a single MPEG bitstream comprising at least one of the plurality of digital still images;
accessing the at least one of the plurality of digital still images;
creating a description file defining a file structure comprising the MPEG bitstream and the at least one of the plurality of digital still images;
interpreting the description file to generate a disc image of the multimedia disc; and
generating the multimedia disc using the disc image.

2. The method of Claim 1, wherein the multimedia disc is a Video CD, a Super Video CD, or a DVD.

3. A method of generating a multimedia disc, comprising the steps of: accessing a plurality of digital still images;
generating a single MPEG bitstream comprising at least one of the plurality of digital still images;
accessing the at least one of the plurality of digital still images;
formatting the at least one of the plurality of digital still images as a JPEG image in accordance with an image processing and rendering software application;
creating a description file defining a file structure comprising the image processing and rendering software application, the MPEG bitstream, and the JPEG image;
interpreting the description file to generate a disc image of the multimedia disc; and
generating the multimedia disc using the disc image.

4. The method of Claim 3, wherein the image processing and rendering software application is operable on a computer, and the JPEG image is viewable using the image processing and rendering software application.

5. The method of Claim 3, wherein the image processing and rendering software application is a Kodak Picture CD software application.

6. A method of generating a multimedia disc, comprising the steps of: accessing a plurality of digital still images;
generating a first MPEG bitstream comprising a first one of the plurality of digital still images;
associating a first image location with the first MPEG bitstream;
generating a second MPEG bitstream comprising a second one of the plurality of digital still images;
associating a second image location with the second MPEG bitstream; providing a selection means for a user to select an albuming option;
accessing the first image location associated with the first MPEG bitstream to access the first one of the plurality of digital still images;
accessing the second image location associated with the second MPEG bitstream to access the second one of the plurality of digital still images;
formatting the first one and the second one of the plurality of digital still images in accordance with an image processing and rendering software application to create a first and second JPEG image, respectively;
creating a description file defining a file structure comprising the first and second MPEG bitstreams, the first and second JPEG images, and the image processing and rendering software application;
interpreting the description file to generate a disc image of the multimedia disc; and
generating the multimedia disc using the disc image.

7. The method of Claim 6, further comprising the step of modifying the at least one of the plurality of digital still images to include text annotation, speech annotation, and graphics.

8. The method of Claim 7, wherein the text or speech annotation is embedded in the first MPEG bitstream.

9. The method of Claim 6, further comprising the step of modifying the at least one of the plurality of digital still images to include audio.

10. The method of Claim 9, wherein the audio is associated with an audio location, and the audio location is stored in a text file.
